# EUROPEAN PATENT APPLICATION

(11) **EP 3 691 219 A1**
(43) Date of publication of application: **05.08.2020**
(21) Application number: 19209928.1
(22) Date of filing: 03.01.2008
(51) Int. Cl.: H04L 29/06

(54) **METHOD AND SYSTEM FOR SESSION MIGRATION**

(30) Priority: 28.05.2007 CN 200710105262
(62) Divisional of application: 08700042.8
(71) Applicant: Huawei Technologies Co., Ltd., Longgang District Shenzhen, Guangdong 518129 (CN)
(72) Inventor: CHEN, Jian, Shenzhen, Guangdong (CN); WANG, Hao, Shenzhen, Guangdong (CN); GUAN, Hongguang, Shenzhen, Guangdong (CN)
(74) Representative: Kreuz, Georg Maria

(57) **Abstract**

A method for session migration includes: sending a request for transferring a session from a source terminal to a target terminal; receiving, by a media transfer controller, the request; and transferring, by the media transfer controller, the session to the target terminal by negotiating with the media relay. A system for session migration is also provided. Through the present invention, the requirements on speed and efficiency in the session migration service are fulfilled.

## Description

### FIELD OF THE INVENTION

The present invention relates to the communication field, and in particular, to a method and system for session migration.

### BACKGROUND

Supposing that Alice is watching a new movie on the television in her lounge but she needs to prepare supper in the kitchen at six o'clock in the evening and does not want to miss the movie, she needs to watch the movie through a display device in the kitchen while preparing supper.

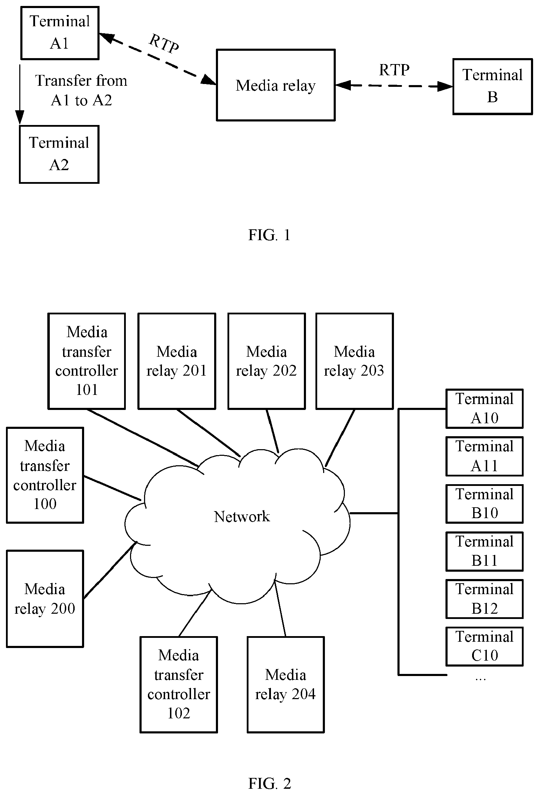

FIG. 1 shows the call forwarding service in the prior art. As shown in FIG. 1, a user A has two terminals A1 and A2, and a user B has a terminal B. The terminal A1 has created a session with a terminal B, and the media stream between them is forwarded through a media relay. The user A wants to move (transfer) the session from the terminal A1 to the terminal A2.

Based on the prior art, the process is:
The session and the media stream between the terminal A1 and terminal B are disconnected;
a session is created between the terminal A2 and terminal B through signaling; and
a media stream is created between the terminal A2 and terminal B.

In the foregoing example, the media stream needs to be disconnected first, and then a new media stream is created by setting up a new end-to-end signaling. Therefore, the session migration handled through the call forwarding service in the prior art is inferior in speed and efficiency.

### SUMMARY

A method and system for session migration are provided in various embodiments of the present invention to meet the requirements on speed and efficiency of the session migration service.

The method for session migration provided in the present invention includes:
sending a request for transferring a session from a source terminal to a target terminal;
receiving, by a media transfer controller, the request; and
transferring the session to the target terminal according to the request.

The system for session migration provided in the present invention includes:
a source terminal and a target terminal connected to a media transfer controller;
a media transfer controller, configured to: receive the request for transferring a session from the source terminal to the target terminal, and transfer the session to the target terminal according to the request; and
a media relay, configured to connect the target terminal with the media transfer controller.

Through the foregoing method, it is not necessary to disconnect the media stream before transferring the session. Therefore, the speed and the efficiency of session migration are improved significantly, and the requirements on speed and efficiency of the session migration service are fulfilled.

### BRIEF DESCRIPTION OF THE DRAWINGS

FIG. 1 shows a call forwarding service in the prior art;
FIG. 2 shows a communication system for session migration in an embodiment of the present invention;
FIG. 3 is a flowchart of a session migration method provided in an embodiment of the present invention;
FIG. 4 is a signaling flowchart of a session migration method provided in an embodiment of the present invention in the first scenario;
FIG. 5 is a signaling flowchart of a session migration method provided in an embodiment of the present invention in the second scenario;
FIG. 6 is a signaling flowchart of a session migration method provided in an embodiment of the present invention in the third scenario;
FIG. 7 is a signaling flowchart of a session migration method provided in an embodiment of the present invention in the fourth scenario; and
FIG. 8 is a signaling flowchart of a session migration method provided in an embodiment of the present invention in the fifth scenario.

### DETAILED DESCRIPTION

The technical solution under the present invention is detailed below by reference to accompanying drawings and preferred embodiments.

FIG. 2 shows a communication system for session migration in an embodiment of the present invention. The communication system includes:
a media transfer controller, adapted to receive the media switching request from the terminal and interact with the media relay to implement media switching, and deployed in the terminal, session controller or media relay, or deployed separately, where one media transfer controller may control one or more media relays;
a media relay, adapted to forward media; and
a terminal, which is attributable to a media controller and a media relay.

As shown in FIG. 2, a media transfer controller 100 controls a media relay 200; a media transfer controller 101 controls a media relay 201, a media relay 202, and a media relay 203; and a media transfer controller 102 controls a media relay 204. A terminal A10 and a terminal A11 are attributable to the media transfer controller 100 and the media relay 200. A terminal B10 is attributable to the media transfer controller 101 and the media relay 201. A terminal B11 is attributable to the media transfer controller 101 and the media relay 202. A terminal B12 is attributable to the media transfer controller 101 and the media relay 203. A terminal B10 is attributable to the media transfer controller 102 and the media relay 204.

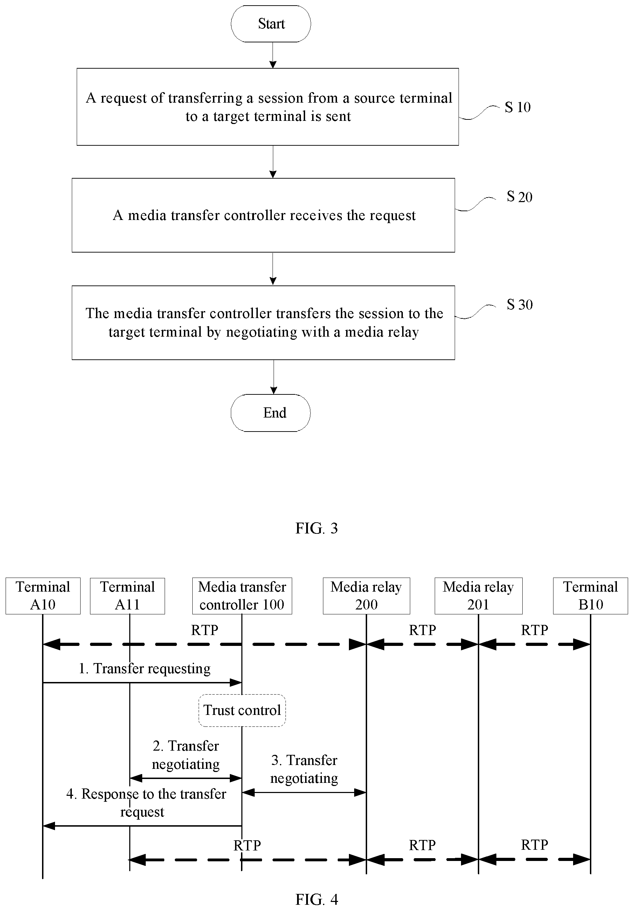

FIG. 3 is a flowchart of a session migration method provided in an embodiment of the present invention. The flowchart includes the following steps:
Step S10: A request for transferring a session from a source terminal to a target terminal is sent.
Step S20: The media transfer controller receives the request.
Step S30: The media transfer controller transfers the session to the target terminal by negotiating with the media relay.

It is not necessary to disconnect the media stream before transferring the session. Therefore, the speed and the efficiency of session migration are improved significantly, and the requirements on speed and efficiency of the session migration service are fulfilled.

The application of the foregoing method is detailed below through the scenarios illustrated FIG. 4 - FIG. 8.

FIG. 4 shows scenario 1: The source terminal triggers migration proactively.

As shown in FIG. 4, the terminals A10 and A11 are attributable to the media transfer controller 100 and the media relay 200, and the terminal B10 is attributable to the media relay 201 (this media relay is not controlled by the media transfer controller 100). The terminal A10 is in a conversation with the terminal B10. Through the terminal A10, the user requests to transfer the conversation to the terminal A11. In practice, the existing protocols such as Session Initiation Protocol (SIP), Media Gateway Control Protocol (MGCP), H.323, and H.248 may be applied or extended to implement the foregoing embodiment. Because the SIP is prevalent currently, the embodiment described here supposes that the SIP is applied. The steps are as follows:
1. The terminal A10 requests the media transfer controller 100 to transfer the session to the terminal A11, and the media transfer controller 100 judges whether the session can be transferred from the terminal A10 to the terminal A11. For example, the terminal A10 sends a REFER message to the media controller 100, requesting to transfer the session. The message may include: session ID of the session between the terminal A10 and terminal the B10, ID of the target terminal A11, and validity period of session migration.
2. The media transfer controller 100 negotiates with the terminal A11 about transfer parameters. For example, the media controller 100 sends an INVITE message to the terminal A11. The INVITE message may carry the session description information used by the media relay 200 in transferring the current session, for example, the message may be encapsulated through the Session Description Protocol (SDP). The session description information includes: IP address, port number, coding format, and decoding format. After receiving the INVITE message, the terminal A11 may respond with a 200 OK message, which carries the session description information of the terminal A11, for example, the message is encapsulated through the SDP. The session description information includes: IP address, port number, coding format, and decoding format. After receiving the 200 OK message, the media controller 100 sends an acknowledgement (ACK) message to terminal A11.
3. The media transfer controller 100 negotiates with the media relay 200 about transfer parameters. For example, the media controller 100 sends an INVITE message to the terminal media relay 200. The INVITE message may carry the session description information used by terminal A11 in attempting to join the current session, for example, the message may be encapsulated through the SDP. The session description information includes: IP address, port number, coding format, and decoding format. After receiving the INVITE message, the terminal media relay 200 may respond with a 200 OK message, which carries the session description information of the terminal media relay 200, for example, the message is encapsulated through the SDP. The session description information includes: IP address, port number, coding format, and decoding format. After receiving the 200 OK message, the media controller 100 sends an ACK message to the terminal media relay 200.
4. The media transfer controller responds to the transfer request of the terminal A10. For example, the media controller 100 sends a 200 OK message to the terminal A10 in response to the REFER message.

Through the messages sent in the foregoing step 2 and step 3, the signaling is set up between the terminal A11 and the media relay 200, and session information (such as IP address, port number, coding format, and decoding format) is negotiated between the terminal A11 and the media relay 100 through the session description information carried in such messages. According to the negotiation result, the terminal A11 and the media relay 100 can transfer the session, namely, transmit the media stream, for example, through a Real-time Transmission Protocol (RTP).

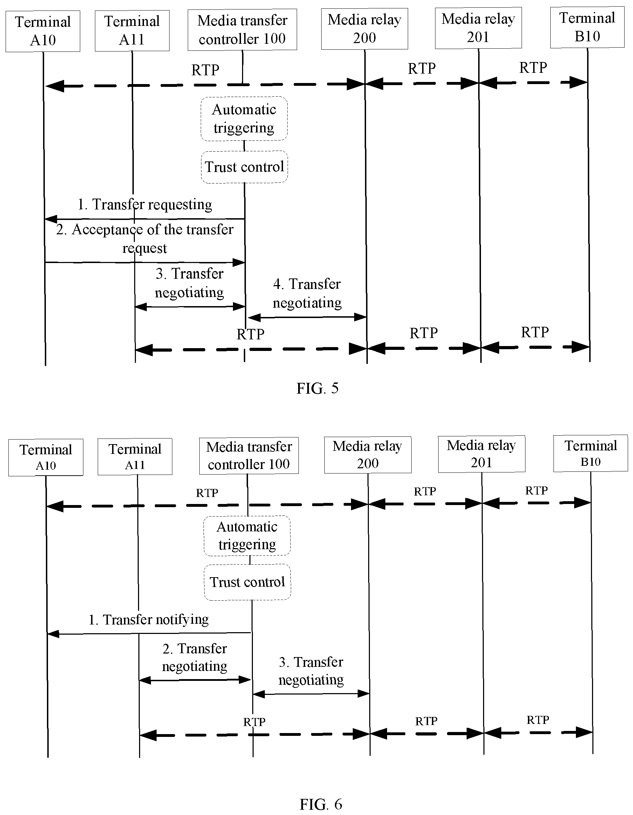

FIG. 5 shows scenario 2: The media transfer controller triggers migration, and the source terminal is controllable.

As shown in FIG. 5, the terminals A10 and A11 are attributable to the media transfer controller 100 and the media relay 200, and the terminal B10 is attributable to the media relay 201 (this media relay is not controlled by the media transfer controller 100). The terminal A10 is in a conversation with the terminal B10, the media transfer controller 100 triggers the transfer according to the environment perception system and the configuration system (for example, the terminal A10 is configured to transfer the session to the terminal A11 under certain time and place conditions, and the time and place parameters are obtained through the environment perception system). In this case, however, it is the terminal A10 that confirms whether to really transfer the session. The steps are as follows:
1. The media transfer controller 100 triggers a transfer request automatically. At this time, the media transfer controller 100 may judge whether the session can be transferred from the terminal A10 to the terminal A11 according to an established trust system. If the session can be transferred, the media transfer controller 100 sends a transfer confirmation request to the terminal A10.
2. The terminal A10 responds with a consent.
3. The media transfer controller 100 negotiates with the terminal A11 about transfer parameters.
4. The media transfer controller 100 negotiates with the media relay 200 about the transfer parameters, and then transfers the session to the target terminal through the RTP according to the negotiated transfer parameters.

FIG. 6 shows scenario 3: The media transfer controller triggers migration, and the source terminal is uncontrollable.

As shown in FIG. 6, the terminals A10 and A11 are attributable to the media transfer controller 100 and the media relay 200, and the terminal B10 is attributable to the media relay 201 (this media relay is not controlled by the media transfer controller 100). The terminal A10 is in a conversation with terminal B10, the media transfer controller 100 triggers the transfer according to the environment perception system and the configuration system (for example, the terminal A10 is configured to transfer the session to the terminal A11 under certain time and place conditions, and the time and place parameters are obtained through the environment perception system). In this case, the terminal does not need to confirm whether to really transfer the session, but the terminal is notified of the transfer. The steps are as follows:
1. The media transfer controller 100 triggers a transfer request automatically. At this time, the media transfer controller 100 may judge whether the session can be transferred from the terminal A10 to the terminal A11 according to an established trust system. If the session can be transferred, the media transfer controller notifies the terminal A10 that session transfer is required.
2. The media transfer controller 100 negotiates with the terminal A11 about transfer parameters.
3. The media transfer controller 100 negotiates with the media relay 200 about the transfer parameters, and then transfers the session to the target terminal through the RTP according to the negotiated transfer parameters.

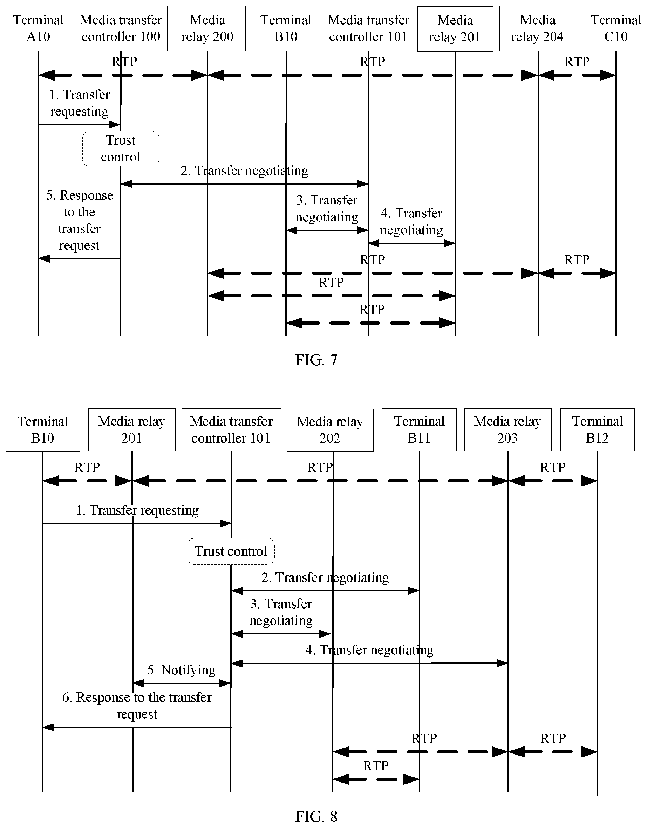

FIG. 7 shows scenario 4: The source terminal and the target terminal are attributable to different media transfer controllers.

As shown in FIG. 6, the terminal A10 is attributable to the media transfer controller 100 and the media relay 200, terminal B10 is attributable to the media transfer controller 101 and the media relay 201, and a terminal C10 is attributable to the media relay 204 (this media relay is not controlled by the media transfer controller 100 or the media transfer controller 101). The terminal A10 is in a conversation with the terminal C10. Through the terminal A10, the user requests to transfer the conversation to the terminal B10. The steps are as follows:
1. The terminal A10 requests the media transfer controller 100 to transfer the session. At this time, the media transfer controller 100 may judge whether the session can be transferred from the terminal A10 to the terminal B10 according to an established trust system.
2. The media transfer controller 100 negotiates with the media transfer controller 101 about transfer parameters.
3. The media transfer controller 101 negotiates with the terminal B10 about the transfer parameters.
4. The media transfer controller 101 negotiates with the media relay 201 about the transfer parameters.
5. The media transfer controller 100 responds to the transfer request of the terminal A10, and then transfers the session to the target terminal through the RTP according to the negotiated transfer parameters.

FIG. 8 shows scenario 5: One media transfer controller controls multiple media relays.

As shown in FIG. 7, the terminal B10, the terminal B11 and the terminal B12 are attributable to the media transfer controller 101, the terminal B10 is attributable to the media relay 201, the terminal B11 is attributable to the media relay 202, and the terminal B12 is attributable to the media relay 203. The media relay 201, the media relay 202, and the media relay 203 are controlled by the media transfer controller 101. The terminal B10 is in a conversation with the terminal B12. Through the terminal B10, the user requests to transfer the conversation to the terminal B11. The steps are as follows:
1. The terminal B10 requests the media transfer controller 101 to transfer the session. At this time, the media transfer controller 101 may judge whether the session can be transferred from the terminal **B10** to the terminal B11 according to an established trust system.
2. The media transfer controller 101 negotiates with the terminal B11 about the transfer parameters.
3. The media transfer controller 101 negotiates with the media relay 202 about the transfer parameters.
4. The media transfer controller 101 negotiates with the media relay 203 about the transfer parameters.
5. The media transfer controller 101 notifies the media relay 201.
6. The media transfer controller 101 responds to the transfer request of the terminal B10, and then transfers the session to the target terminal through the RTP according to the negotiated transfer parameters.

To sum up, the session migration method under the present invention implements the session migration service without participation of the communication peer, without setting up any end-to-end signaling, thus accomplishing higher speed and efficiency and fulfilling the requirements on media transfer in session migration.

Preferably, buffering may be performed on the media relay to make the transfer smoother.

Preferably, the media relay sends media streams to the source terminal (a terminal A1) and the target terminal (a terminal A2) concurrently in a specific period, thus improving user experience.

Preferably, a media codec adapter may be deployed between the media relays or on the media relays.

Based on the foregoing method, a system for session migration is provided in an embodiment of the present invention. The system includes: a source terminal and a target terminal connected to a media transfer controller; the media transfer controller, configured to: receive the request for transferring a session from the source terminal to the target terminal, and transfer the session to the target terminal through negotiation with the media relay; and a media relay, configured to connect the target terminal with the media transfer controller.

Evidently, through the foregoing method, it is not necessary to disconnect the media stream before transferring the session. Therefore, the speed and the efficiency of session migration are improved significantly, and the requirements on speed and efficiency of the session migration service are fulfilled.

Further embodiments of the present invention are provided in the following. It should be noted that the numbering used in the following section does not necessarily need to comply with the numbering used in the previous sections.
Embodiment 1. A method for session migration, comprising:
   sending a request for transferring a session from a source terminal to a target terminal;
   receiving, by a media transfer controller, the request; and
   transferring the session to the target terminal according to the request.
Embodiment 2. The method of embodiment 1, wherein the transferring of the session to the target terminal comprises:
   transferring the session to the target terminal by negotiating with a media relay.
Embodiment 3. The method of embodiment 2, wherein the sending of the request for transferring the session from the source terminal to the target terminal comprises:
   triggering, by the source terminal, the request for transferring the session to the target terminal proactively, and sending the request to the media transfer controller.
Embodiment 4. The method of embodiment 3, wherein the transferring, by the media transfer controller, the session to the target terminal by negotiating with the media relay comprises:
   negotiating, by the media transfer controller, with the target terminal about transfer parameters;
   negotiating with the media relay about the transfer parameters;
   responding to the request of the source terminal; and
   transferring the session to the target terminal according to the negotiated transfer parameters.
Embodiment 5. The method of embodiment 2, wherein the sending of the request for transferring the session from the source terminal to the target terminal comprises:
   triggering, by the media transfer controller, the request for transferring the session to the target terminal, and sending the request to the source terminal; and
   accepting, by the source terminal, the request, and responding to the media transfer controller.
Embodiment 6. The method of embodiment 5, wherein the transferring, by the media transfer controller, of the session to the target terminal by negotiating with the media relay comprises:
   negotiating, by the media transfer controller, with the target terminal about transfer parameters; and
   negotiating with the media relay about the transfer parameters; and
   transferring the session to the target terminal according to the negotiated transfer parameters.
Embodiment 7. The method of embodiment 2, wherein the sending of the request for transferring the session from the source terminal to the target terminal comprises:
   triggering, by the media transfer controller, the request for transferring the session to the target terminal, and notifying the request to the source terminal.
Embodiment 8. The method of embodiment 7, wherein the transferring, by the media transfer controller, of the session to the target terminal by negotiating with the media relay comprises:
   negotiating, by the media transfer controller, with the target terminal about transfer parameters; and
   negotiating with the media relay about the transfer parameters; and
   transferring the session to the target terminal according to the negotiated transfer parameters.
Embodiment 9. The method of embodiment 2, wherein:
   the source terminal and the target terminal are respectively connected to a first media transfer controller and a second media transfer controller among the multiple media transfer controllers.
Embodiment 10. The method of embodiment 9, wherein the transferring, by the media transfer controller, of the session to the target terminal by negotiating with the media relay comprises:
   negotiating, by the first media transfer controller, with the second media transfer controller about transfer parameters;
   negotiating, by the second media transfer controller, with the target terminal about the transfer parameters;
   negotiating with the media relay about the transfer parameters;
   responding, by the first media transfer controller, to a transfer request of the source terminal; and
   transferring the session to the target terminal according to the negotiated transfer parameters.
Embodiment 11. The method of embodiment 2, wherein:
   the multiple media relays are connected to one media transfer controller.
Embodiment 12. The method of embodiment 11, wherein the transferring, by the media transfer controller, of the session to the target terminal by negotiating with the media relay comprises:
   negotiating, by the media transfer controller, with the target terminal about transfer parameters;
   negotiating, by the media transfer controller, with a first media relay among the media relays about the transfer parameters;
   negotiating with a second media relay among the media relays about the transfer parameters;
   notifying the first media relay;
   responding to a transfer request of the source terminal; and
   transferring the session to the target terminal according to the negotiated transfer parameters.
Embodiment 13. The method of embodiment 4, 6, 8, 10, or 12, wherein the transferring, by the media transfer controller, of the session to the target terminal by negotiating with the media relay further comprises:
   confirming, by the media transfer controller, that the session can be transferred to the target terminal through a trust system.
Embodiment 14. A system for session migration, comprising:
   a source terminal and a target terminal connected to a media transfer controller;
   a media transfer controller, configured to: receive a request for transferring a session from the source terminal to the target terminal, and transfer the session to the target terminal; and a media relay, configured to connect the target terminal with the media transfer controller.

Although the invention is described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for session migration, comprising:
negotiating (2 in FIGS. 4, 6, 8, and 3 in FIGS. 5, 7), by a media transfer controller (100 in FIGS. 4-6, and 101 in FIGS. 7, 8), with a target terminal (All in FIGS. 4-6, B10 in FIG. 7, and B11 in FIG. 8) about transfer parameters for performing a session transfer, wherein the session transfer includes transferring an end point of a session from a source terminal (A10 in FIGS. 4-7, and B10 in FIG. 8) to the target terminal (All in FIGS. 4-6, B10 in FIG. 7, B11 in FIG. 8); and
negotiating (3 in FIGS. 4, 6, 8 and 4 in FIGS. 5, 7), by the media transfer controller, with a relay (200, 203) about transfer parameters for performing the session transfer.

2. The method of claim 1, further comprising:
receiving (1 in FIG. 4), by the media transfer controller, a request for performing the session transfer from the source terminal; and
responding (4 in FIG. 4), by the media transfer controller, the request of the source terminal after the negotiation with the target terminal and the negotiation with the relay.

3. The method of claim 1, further comprising:
sending (1 in FIGS. 5 and 6), by the media transfer controller, a transfer request about performing the session transfer to the source terminal.

4. The method of claim 1, further comprising:
negotiating, by the media transfer controller (101 in FIG. 7), with a different media transfer controller (100 in FIG. 7) about the session transfer.

5. The method of claim 1, further comprising:
negotiating, by the media transfer controller (101 in FIG. 8), with a different media relay (202 in FIG. 8) about the session transfer.

6. A media transfer controller (100 in FIGS. 4-6, and 101 in FIGS. 7, 8), configured to:
negotiate (2 in FIGS. 4, 6, 8, and 3 in FIGS. 5, 7) with a target terminal (A11 in FIGS. 4-6, B10 in FIG. 7, and B 11 in FIG. 8) about transfer parameters for performing a session transfer, wherein the session transfer includes transferring an end point of a session from a source terminal (A10 in FIGS. 4-7, and B10 in FIG. 8) to the target terminal (All in FIGS. 4-6, B10 in FIG. 7, B11 in FIG. 8); and
negotiate (3 in FIGS. 4, 6, 8 and 4 in FIGS. 5, 7) with a relay (200, 203) about transfer parameters for performing the session transfer.

7. The media transfer controller of claim 6, further configured to:
receive (1 in FIG. 4) a request for performing the session transfer from the source terminal; and
respond (4 in FIG. 4) the request of the source terminal after the negotiation with the target terminal and the negotiation with the relay.

8. The media transfer controller of claim 6, further configured to:
send (1 in FIGS. 5 and 6), by the media transfer controller, a transfer request about performing the session transfer to the source terminal.

9. The media transfer controller of claim 6, further configured to:
negotiate (2 in FIG. 7) with a different media transfer controller (100 in FIG. 7) about the session transfer.

10. The media transfer controller of claim 6, further configured to:
negotiate (4 in FIG. 8) with a different media relay (202 in FIG. 8) about the session transfer.
